# EUROPEAN PATENT SPECIFICATION

(11) **EP 3 524 487 B1**
(45) Date of publication and mention of the grant of the patent: **07.09.2022**
(21) Application number: 19275007.3
(22) Date of filing: 18.01.2019
(51) Int. Cl.: B60W 30/20, B60W 10/06, B60W 10/08, B60W 20/15, B60K 6/485

(54) **A MOTOR VEHICLE HAVING ACTIVE SHUFFLE REDUCTION**
KRAFTFAHRZEUG MIT AKTIVER SCHWINGUNGSDÄMPFUNG
VÉHICULE À MOTEUR À RÉDUCTION ACTIVE D'OSCILLATIONS

(30) Priority: 13.02.2018 GB 201802298
(43) Date of publication of application: 14.08.2019
(73) Proprietor: Ford Global Technologies, LLC, Dearborn, MI 48126 (US)
(72) Inventor: Crisp, Nick, Benfleet, Essex SS7 2RJ (GB); Rowland, Mike, Wickham Bishops, Essex CM8 3LY (GB); Jansz, Martin, Malvern East Victoria 3145 (AU)
(74) Representative: Haseltine Lake Kempner LLP

(56) References cited:
- EP-A1- 3 219 562
- US-A1- 2013 296 130
- US-A1- 2017 210 375

## Description

This invention relates to motor vehicles having an internal combustion engine driving a driveline and in particular to the use of an integrated electric starter-generator to assist with the attenuation of driveline shuffle.

It is well known that a driveline of a motor vehicle is a lightly damped system that is prone to oscillation particularly in the case of a throttle 'tip-in' or a throttle 'tip-out' event which often result in torsional impulses being transferred to the driveline. One such mode of oscillation is often referred to as 'driveline shuffle' and is related to the natural frequency of the driveline. Driveline shuffle typically occurs in the range of 1 to 10Hz depending upon the selected gear and the torsional stiffness of the various components making up the driveline.

It has previously been proposed in, for example, US Patent 6,718,943 to adjust the operation of a combustion engine of a motor vehicle in order to reduce the magnitude of such driveline shuffle. Although such a technique is useful in reducing driveline oscillations it has a number of disadvantages namely that the combustion engine needs to be operated inefficiently to achieve the desired aim and that at very low engine speeds the combustion engine is often too slow in response to effectively compensate for the oscillatory nature of the driveline shuffle that is occurring.

Document EP3219562 discloses a system for correcting torque oscillations generated in a transmission of a hybrid drive vehicle comprising a heat engine, at least one electric machine and a mechanical transmission connected to said engine.

Document US2017/210375 discloses a hybrid module with a vibration reducing system which is coupled between an output side and an input side of the hybrid module.

It is an object of this invention to provide a motor vehicle that overcomes the aforesaid disadvantages by using an integrated starter-generator drivingly connected to a crankshaft of the combustion engine to assist with the reduction of driveline shuffle particularly when the combustion engine is operating at low speed.

According to a first aspect of the invention there is provided a motor vehicle having a combustion engine driving a multi-speed transmission, an integrated starter-generator driveably connected to a crankshaft of the combustion engine and an electronic controller to control the operation of the combustion engine and the integrated starter-generator, the electronic controller being operable to control use of the combustion engine and the integrated starter-generator in a number of shuffle reduction modes including a first shuffle reduction mode wherein the electronic controller is arranged to select the shuffle reduction mode to be used based at least partly on the rotational speed of the crankshaft of the combustion engine and when the first shuffle reduction mode is selected by the electronic controller, the electronic controller may be operable to use only the integrated starter-generator to reduce driveline shuffle, wherein there is a second reduction shuffle mode and/or a third reduction shuffle mode, wherein when the second shuffle reduction mode is selected by the electronic controller, the electronic controller is operable to use the engine and the integrated starter-generator in combination to reduce driveline shuffle, the integrated starter-generator being used to reduce driveline shuffle by applying a negative braking torque to the crankshaft to reduce the rotational speed of the crankshaft and the engine being used to increase the rotational speed of the crankshaft, and wherein when the third shuffle reduction mode is selected by the electronic controller, the electronic controller is operable to use the engine as the primary means for increasing and reducing the rotational speed of the crankshaft to reduce driveline shuffle and use the integrated starter-generator to supplement the effect of the engine when the engine is operating to reduce the speed of the crankshaft by applying additional negative braking torque to the crankshaft.

When there is a need to increase the rotational speed of the crankshaft to reduce driveline shuffle, the electronic controller may be arranged to use the integrated starter-generator to apply a positive torque to the crankshaft of the engine and, when there is a need to reduce the rotational speed of the crankshaft to reduce driveline shuffle, the electronic controller may be arranged to use the integrated starter-generator to apply a negative braking torque to the crankshaft of the engine.

The electronic controller may be operable to only use the first shuffle reduction mode when the rotational speed of the crankshaft is below a first predefined low speed threshold.

The electronic controller may be operable to only use the first shuffle reduction mode when the rotational speed of the crankshaft is below a predefined speed threshold and a driveline shuffle frequency is below a predefined shuffle frequency threshold.

The electronic controller may be operable to use the second shuffle mode when the rotational speed of the crankshaft is above the first predefined low speed threshold and below a second higher speed threshold.

Alternatively, the electronic controller may be operable to use the second shuffle mode when the rotational speed of the crankshaft is below the predefined speed threshold and a shuffle frequency of the driveline is above the shuffle frequency threshold.

The electronic controller may be operable to use the third shuffle reduction mode when the rotational speed of the engine is above the second predefined speed threshold.

Alternatively, the electronic controller may be operable to use the third shuffle reduction mode when the rotational speed of the engine is above the predefined speed threshold.

According to a second aspect of the invention there is provided a method of reducing motor vehicle driveline shuffle comprising:-
a/ in a first engine rotational speed dependent shuffle reduction mode utilising only an integrated starter- generator driveably connected to a crankshaft of a combustion engine of the motor vehicle to reduce driveline shuffle;
b/ in a second engine rotational speed dependent shuffle reduction mode utilising the combustion engine and the integrated starter-generator in combination to reduce driveline shuffle by using the integrated starter-generator to apply a negative braking torque to the crankshaft when there is a need to reduce the rotational speed of the crankshaft and by using the combustion engine to increase the rotational speed of the crankshaft, when there is a need to increase the rotational speed of the crankshaft; and
c/ in a third engine rotational speed dependent shuffle reduction mode utilising the combustion engine as the primary means for increasing and reducing the rotational speed of the crankshaft so as to reduce driveline shuffle when the rotational speed of the crankshaft is above the second predefined speed threshold and use the integrated starter-generator to supplement the combustion engine by applying additional negative braking torque to the crankshaft of the engine when there is a need to reduce the rotational speed of the crankshaft.

The method may further comprise using the first engine rotational speed dependent shuffle reduction mode when the rotational speed of the crankshaft is below a first predefined speed threshold, using the second engine rotational speed dependent shuffle reduction mode when the rotational speed of the crankshaft is below a second predefined speed threshold that is higher than the first predefined low speed threshold, and using the third engine rotational speed dependent shuffle reduction mode when the rotational speed of the crankshaft is above the second predefined speed threshold.

Alternatively, the method may further comprise using the first engine rotational speed dependent shuffle reduction mode when the rotational speed of the crankshaft is below a predefined speed threshold and a driveline shuffle frequency is below a shuffle frequency limit, using the second engine rotational speed dependent shuffle reduction mode when the rotational speed of the crankshaft is below the predefined speed threshold and the driveline shuffle frequency is above the shuffle frequency limit; and using the third engine rotational speed dependent shuffle reduction mode when the rotational speed of the crankshaft is above the predefined speed threshold.

The driveline frequency may be dependent upon a gear ratio selected in a multi-speed transmission driven by the engine wherein, the driveline shuffle frequency is not higher than the shuffle frequency limit when the rotational speed of the engine is at the predefined speed threshold and a low gear is selected in the transmission and the driveline shuffle frequency is above the shuffle frequency limit when the rotational speed of the engine is at the predefined speed threshold and a high gear is selected in the transmission.

The invention will now be described by way of example with reference to the accompanying drawing of which:-
Fig.1 is a schematic drawing of a motor vehicle constructed in accordance with a first aspect of the invention having an internal combustion engine and an integrated starter-generator used to reduce driveline shuffle;
Fig.2 is a graph showing a relationship between the maximum torque applied at a crankshaft of a combustion engine by an integrated starter-generator with respect to variations crankshaft speed;
Figs.3a to 3c are schematic graphs showing the effect of applying the control methodology shown in Fig.4a to the motor vehicle shown in Fig.1;
Fig.4a is a table showing a first example of a control methodology used by an electronic controller forming part of the motor vehicle shown in Fig.1 to reduce driveline shuffle;
Fig.4b is a table showing a second alternative example of a control methodology used by the electronic controller forming part of the motor vehicle shown in Fig.1 to reduce driveline shuffle;
Fig.5 is a high level flowchart of a first embodiment of a method for reducing driveline shuffle in accordance with a second aspect of the invention; and
Fig.6 is a high level flowchart of a second embodiment of a method for reducing driveline shuffle in accordance with the second aspect of the invention.

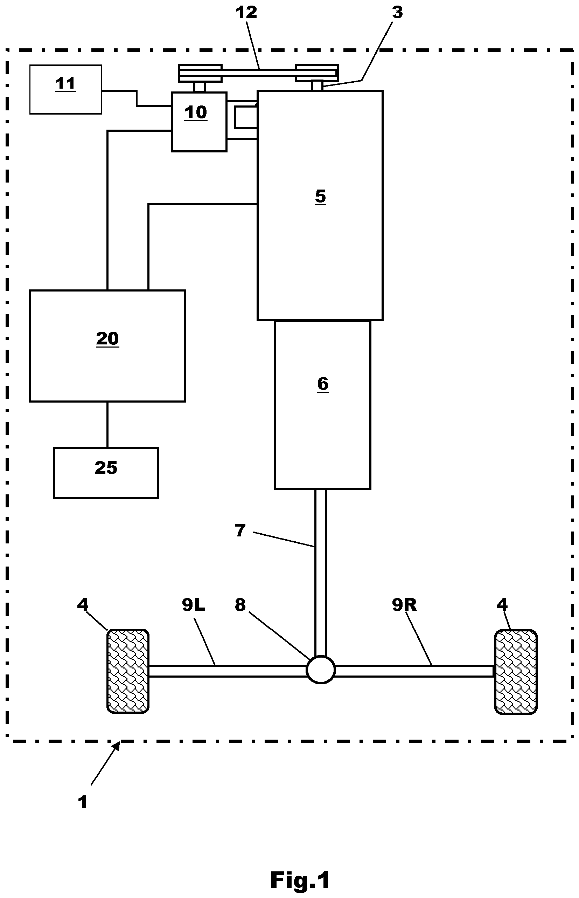

With reference to Figs.1 to 4b there is shown a motor vehicle 1 having an internal combustion engine 5 driving a manual multi-speed transmission 6. The transmission 6 provides, in the case of this example, a driving torque to a pair of road wheels 4 via a driveline including a propeller shaft 7 a differential 8 and a pair of half shafts 9L, 9R. It will be appreciated that the invention is not limited to a two wheel rear drive motor vehicle and can be applied to other driveline arrangements such as, for example, all wheel drive and front wheel drive.

An electric motor-generator in the form of an integrated starter-generator (ISG) 10 is drivingly connected to a crankshaft 3 of the combustion engine 5 by a belt drive 12 which in the case of this example forms part of a front end accessory drive. That is to say, in the case of this example, the ISG 10 is in the form of a 42 volt belt integrated starter-generator (BISG). The ISG 10 is, in the case of this example, operatively connected to a 42 volt battery 11. When the ISG 10 is operating as a motor so as to apply a positive torque to the crankshaft 3, electrical energy is drawn from the battery 11 and the state of charge of the battery 11 will be reduced and conversely, when the ISG 10 is operating as a generator so as to apply a negative torque to the crankshaft 3, electrical energy is supplied to the battery 11 and the state of charge of the battery 11 will be increased.

An electronic controller 20 is provided to control the operation of the ISG 10 and the combustion engine 5 as is well known in the art. However, in the case of this invention the electronic controller 20 is also arranged to control the ISG 10 and the combustion engine 5 in accordance with a control methodology used to reduce driveline shuffle in a fuel efficient manner.

The electronic controller 20 receives information from a number of sensor inputs 25 that it uses to control the operation of the combustion engine 5 and the ISG 10.

It will be appreciated that the electronic controller 20 need not be a single unit but could comprise a number of separate electronic controllers or control units that are operationally linked to provide the desired functionality.

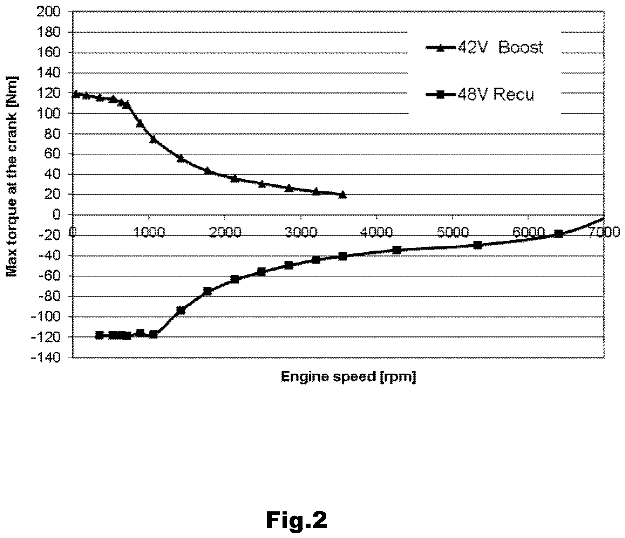

With particular reference to Fig.2 there is shown the relationship between maximum torque at the crankshaft 3 of the combustion engine 5 that can be provided by the ISG 10 versus engine speed (crankshaft rotational speed).

Two relationships are shown, in the first relationship referred to as "42V Boost" the maximum amount of positive torque that can be supplied by the ISG 10 to the crankshaft 3 of the combustion engine 5 is shown versus engine speed.

In the second relationship referred to as "42V Recu" the maximum amount of negative (braking) torque that can be supplied by the ISG 10 to the crankshaft 3 of the combustion engine 5 is shown versus engine speed.

It can be seen that in both cases the magnitude of torque from the ISG 10 irrespective of whether it is positive or negative reduces rapidly as the rotational speed of the engine increases above circa 1000Rpm.

In the case of the example shown the ISG 10 is unable to provide any significant positive torque by the time the rotational speed of the combustion engine 5 reaches 3500 RPM but is still able to provide a low level of negative (braking) torque. Above 3500Rpm the magnitude of negative torque available from the ISG 10 decreases further to a very low level.

In the case of the ISG 10 represented in Fig.2 three distinct speed ranges can be defined. In the first speed range when the engine speed (N) is less than circa 1000RPM the ISG 10 is able to contribute positive and negative torque to reduce driveline shuffle. Therefore if a first predefined speed threshold N1 is set to circa 1000Rpm it can be assured that if N < N1 the ISG 10 will be able to contribute significantly to the reduction of driveline shuffle. At such low rotational speeds the combustion engine 5 is unable to significantly contribute to the reduction of driveline shuffle and so full authority for shuffle reduction can be given to the ISG 10 in this speed range.

In a second speed range from circa 1000RPM to circa 3000RPM the ISG 10 can contribute significantly to providing negative torque and can provide some positive torque particularly at the lower end of this speed range.

Therefore if a second predefined speed threshold N2 is set to circa 3000RPM it can be assured that if N1< N < N2 the ISG 10 will be able to contribute significantly to the reduction of driveline shuffle by supplying negative torque to the crankshaft 3 of the combustion engine 5. In this speed range the combustion engine 5 is able to contribute effectively in the reduction of driveline shuffle but it is inefficient to use the combustion engine to slow the crankshaft 3 and so when required the ISG 10 is used to apply a negative torque to slow the crankshaft 3 and the combustion engine is used primarily to increase the speed of rotation of the crankshaft 3. Therefore in this speed range the authority for shuffle reduction is shared between the combustion engine 5 and the ISG 10.

In a third speed range above circa 3000RPM the ISG 10 can provide a low level of negative torque but cannot provide any significant level of positive torque.

Therefore if the second predefined speed threshold N2 is set to circa 3000RPM it can be assured that if N > N2 the ISG 10 will not be able to contribute significantly to the reduction of driveline shuffle but can provide a low level of negative torque to the crankshaft 3 of the combustion engine 5 to help increase the efficiency of the combustion engine 5. It will be appreciated that operating a combustion engine in a negative torque manner requires the combustion engine to be operated inefficiently.

At such high rotational speeds the ISG 10 is unable to significantly contribute to the reduction of driveline shuffle and so authority for shuffle reduction can be given to the combustion engine 5 in this speed range.

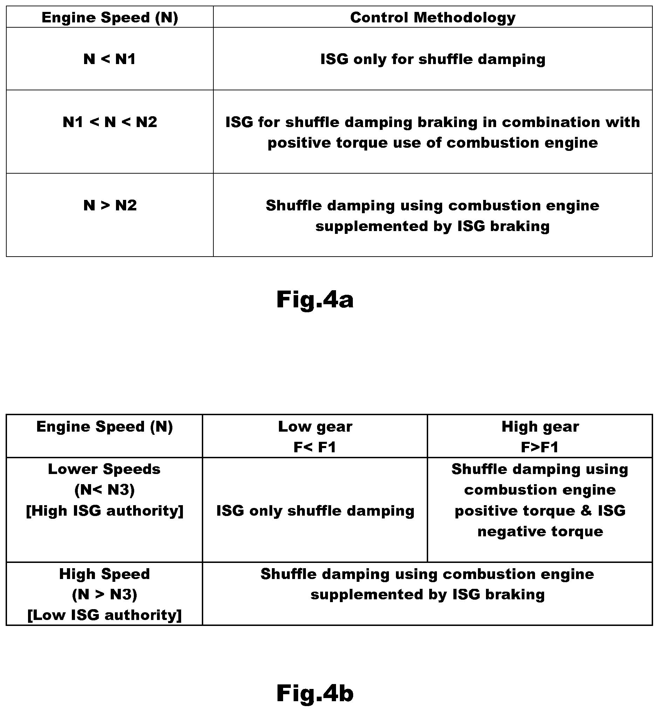

With particular reference to Fig.4a there is shown a first example of a control methodology used by the electronic controller 20 to control the combustion engine 5 and the ISG 10 in order to reduce driveline shuffle.

When the rotational speed (N) of the crankshaft 3 of the combustion engine 5 is below a first low speed threshold (N1) the electronic controller 20 is operable to use only the ISG 10 to reduce driveline shuffle by providing both positive and negative torque from the ISG 10 to the crankshaft 3 of the combustion engine 5. Positive torque is supplied to the crankshaft 3 from the ISG 10 when it is determined from the inputs 25 to the electronic controller 20 that the speed of the crankshaft 3 needs to be increased and negative (braking) torque is supplied to the crankshaft 3 from the ISG 10 when it is determined from the inputs 25 to the electronic controller 20 that the speed of the crankshaft 3 needs to be reduced.

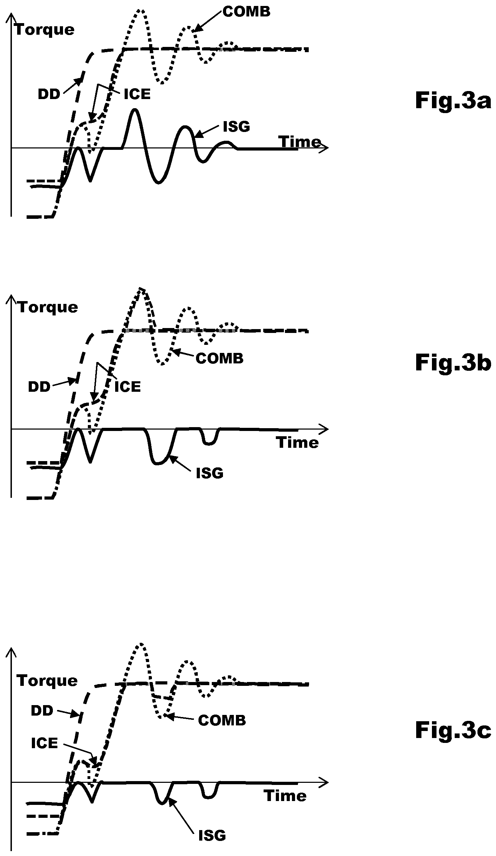

The effect of such a control methodology is shown in Fig.3a for a tip-in event where 'DD' represents driver demand (throttle pedal depression); 'ICE' represents the contribution from the combustion engine 5; 'ISG' represents the contribution from the ISG 10 and 'COMB' represents the combined effect of the contributions from the combustion engine 5 and the ISG 10. Note that both positive and negative torque contributions are being made by the ISG 10.

When the rotational speed (N) of the crankshaft 3 of the combustion engine 5 is above the first low speed threshold (N1) but below a second higher speed threshold (N2) the electronic controller is operable to use the ISG 10 to help reduce driveline shuffle by providing negative torque from the ISG 10 to the crankshaft 3 of the combustion engine 5. Positive torque is supplied to the crankshaft 3 by operating the combustion engine 5 to increase the rotational speed of the crankshaft 3 when it is determined from the inputs 25 to the electronic controller 20 that the speed of the crankshaft 3 needs to be increased and negative (braking) torque is supplied to the crankshaft 3 from the ISG 10 when it is determined from the inputs 25 to the electronic controller 20 that the speed of the crankshaft 3 needs to be reduced.

The effect of such a control methodology is shown in Fig.3b for a tip-in event where 'DD' represents driver demand (throttle pedal depression); 'ICE' represents the contribution from the combustion engine 5; 'ISG' represents the contribution from the ISG 10 and 'COMB' represents the combined effect of the contributions from the combustion engine 5 and the ISG 10. Note that positive torque contributions are being made by the combustion engine 5 and that only negative torque contributions are being made by the ISG 10.

When the rotational speed (N) of the crankshaft 3 of the combustion engine 5 is above the second speed threshold (N2) use of the ISG 10 is less effective in reducing driveline shuffle and so the electronic controller is operable to primarily use the combustion engine 5 to reduce driveline shuffle. This is achieved by providing positive torque to the crankshaft 3 from the combustion engine 5 to increase the rotational speed of the crankshaft 3 when it is determined from the inputs 25 to the electronic controller 20 that the speed of the crankshaft 3 needs to be increased and by providing negative (braking) torque from the combustion engine 5 when it is determined from the inputs 25 to the electronic controller 20 that the speed of the crankshaft 3 needs to be reduced. The ISG 10 is unable to effectively reduce driveline shuffle but by providing some negative torque from the ISG 10 to the crankshaft 3 the operating efficiency of the combustion engine 5 can be improved by reducing the negative torque that has to be supplied from the combustion engine 5.

The effect of such a control methodology is shown in Fig.3c for a tip-in event where 'DD' represents driver demand (throttle pedal depression); 'ICE' represents the contribution from the combustion engine 5; 'ISG' represents the contribution from the ISG 10 and 'COMB' represents the combined effect of the contributions from the combustion engine 5 and the ISG 10. Note that positive and negative torque contributions are being made by the combustion engine 5 and that only small negative torque contributions are being made by the ISG 10.

Therefore in summary, at lower engine speeds, the ISG has more torque authority and a faster actuation rate than the combustion engine. The ISG also has the ability to add and subtract torque about the nominal combustion level delivered by the combustion engine. In the present invention, it is therefore proposed that the ISG will be used as an actuator to deliver fast driveability control interventions with full-wave around the nominal torque delivered by the combustion engine at low engine speeds. The reduction in torque provided by the ISG can be achieved without retarding spark in the case of a spark ignited engine or operating a combustion engine less efficiently and so there is an efficiency gain for using the ISG to achieve this control.

At higher engine speeds where the ISG may not be able to increase torque significantly but combustion torque increases can be achieved relatively easily due to faster air system response, half-wave control of the ISG can be used that provides only a negative (braking) torque from the ISG.

At very high engine speeds the ISG is not able to increase or reduce torque significantly as so authority will revert to the combustion engine with the ISG operating so as to provide a low level of negative torque thereby helping to reduce the overall inefficiency of the engine operation.

It will be appreciated that authority will automatically revert to combustion-engine only authority if there is no ISG authority due to, for example, an ISG fault or a low battery state of charge.

With particular reference to Fig.4b there is shown an alternative control methodology to that previously described for use by the electronic controller 20.

In the case of this example when the rotational speed (N) of the crankshaft 3 of the combustion engine 5 is below a speed threshold (N3) and it is determined that the transmission is in a low gear ratio the electronic controller 20 is operable to use only the ISG 10 to reduce driveline shuffle by providing both positive and negative torque from the ISG 10 to the crankshaft 3 of the combustion engine 5. As before positive torque is supplied to the crankshaft 3 from the ISG 10 when it is determined from the inputs 25 to the electronic controller 20 that the speed of the crankshaft 3 needs to be increased and negative (braking) torque is supplied to the crankshaft 3 from the ISG 10 when it is determined from the inputs 25 to the electronic controller 20 that the speed of the crankshaft 3 needs to be reduced.

It will be appreciated that the gear ratio selected in the transmission 6 will have an effect on the speed ratio and the torque ratio between the combustion engine 5 and the output from the transmission 6 which in this case is the propeller shaft 7. Therefore the value of N3 will be set to a value where when one of the lower gears in the transmission 6 is selected the ISG 10 has sufficient authority to reduce driveline shuffle and the resulting torque supplied from the transmission 6 will be sufficient to counteract any driveline shuffle occurring. When in a lower gear the frequency of the shuffle will be relatively low and so the torque reversals between positive and negative torque supply from the ISG 10 will also be low. It will be appreciated that such torque reversals have a detrimental effect on the drive between the ISG 10 and the combustion engine 5 and so it is desirable to keep the frequency of such torque reversal below a predefined frequency limit (F). Therefore the combination of an engine speed (N) less than speed threshold (N3) and the use of a low gear will have the effect of ensuring the predefined frequency limit (F) is not exceeded thereby protecting the ISG drive from excessive wear.

When the rotational speed (N) of the crankshaft 3 of the combustion engine 5 is below the speed threshold (N3) but the transmission 6 is in a high gear, the electronic controller 20 is operable to use the ISG 10 to help reduce driveline shuffle by providing only negative torque from the ISG 10 to the crankshaft 3 of the combustion engine 5 when it is determined from the inputs 25 to the electronic controller 20 that the speed of the crankshaft 3 needs to be reduced. Any positive torque required when it is determined from the inputs 25 to the electronic controller 20 that the speed of the crankshaft 3 needs to be increased is supplied to the crankshaft 3 by operating the combustion engine 5 to increase the rotational speed of the crankshaft 3.

This is because the effect of the higher gear ratio will have the effect of increasing the frequency of driveline shuffle thereby resulting in a requirement for torque reversals at a rate higher than the predefined frequency limit (F). In order to protect the ISG drive from excessive wear the electronic controller 20 is therefore arranged to only use the ISG 10 to provide negative torque to the crankshaft 3 thereby eliminating the need for ISG torque reversals.

When the engine speed is greater than the speed threshold (N3) the amount of positive torque that can be supplied from the ISG 10 is significantly diminished and the combustion engine 5 can efficiently be operated to provide any positive torque required to counteract driveline shuffle. The ISG 10 is unable to effectively reduce driveline shuffle but by providing some negative torque from the ISG 10 to the crankshaft 3 the operating efficiency of the combustion engine 5 can be improved by reducing the negative torque that has to be supplied from the combustion engine 5.

The term 'low gear' means one of the lowest gears such as, for example, first or second gear and the term high gear means one of the higher gears such as top gear or one or two gears below top gear depending upon the number of gear ratios provided by the transmission.

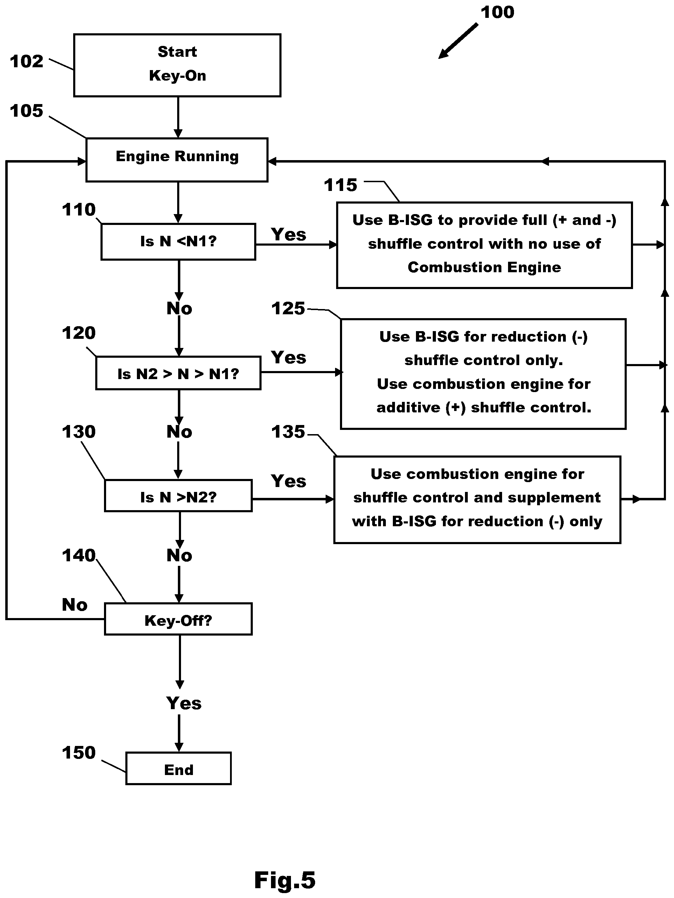

Referring now to Fig.5 there is shown a first embodiment of a method 100 of reducing motor vehicle driveline shuffle for a motor vehicle having a combustion engine and an integrated starter-generator driven by a crankshaft of the combustion engine.

The method 100 starts in box 102 which represents a Key-on event and then advances to box 105 where the combustion engine of the motor vehicle is running.

From box 105 the method advances to box 110 to check whether the current rotational speed (N) of a crankshaft of the engine is greater than a first predefined speed threshold (N1). If it is not greater then the method advances to box 115 where the integrated starter-generator is used to reduce driveline shuffle by providing both positive and negative torque to the crankshaft of the combustion engine when required to reduce driveline shuffle.

From box 115 the method returns to box 105 and then on to box 110. If when checked in box 110 the current rotational speed (N) of a crankshaft of the engine is greater than the first predefined speed threshold (N1) the method advances to box 120.

In box 120 it is checked whether the current rotational speed of the crankshaft of the combustion engine is greater than the first predefined speed threshold (N1) but less than a second predefined speed threshold (N2) and if it is within such a speed range the method advances to box 125.

In box 125 the integrated starter-generator is used to reduce driveline shuffle by providing negative torque to the crankshaft of the combustion engine when required to reduce driveline shuffle. Any positive torque required to reduce driveline shuffle is provided by the combustion engine itself by increasing fuelling or advancing spark timing.

From box 125 the method returns to box 105 and then on to box 110 and the previously described steps are repeated.

Referring back to box 120 if the current speed of the crankshaft of the engine is greater than second predefined speed threshold (N2) the method advances in this case to box 130 to carry out a further check to confirm that the current crankshaft rotational speed (N) is in fact greater than the second predefined speed threshold (N2). It will however be appreciated that in other embodiments box 130 could be omitted and the method would then advance directly from box 120 to box 135.

In box 135 the reduction of driveline shuffle is primarily reduced by using the combustion engine to provide both positive and negative torque as required to reduce the driveline shuffle. The integrated starter-generator is used to provide negative torque to the crankshaft of the combustion engine but the effect of this is primarily to reduce the magnitude of the negative torque that has to be supplied from the combustion engine as the integrated starter-generator is unable when the combustion engine is operating at such a high rotational speed to effectively reduce driveline shuffle.

From box 135 the method returns to box 105 and then on to box 110 and the previously described steps are repeated.

Referring back to box 130 if the current speed of the crankshaft of the engine is not greater than second predefined speed threshold (N2) the method advances in this case to box 140 to check whether a Key-off event has occurred and if it has the method 100 ends as indicated in box 150. If a Key-off event has not occurred then the method returns to box 105 and then on to box 110 and the previously described steps are repeated.

It will be appreciated that in practice whenever a Key-off event occurs the method 100 will end.

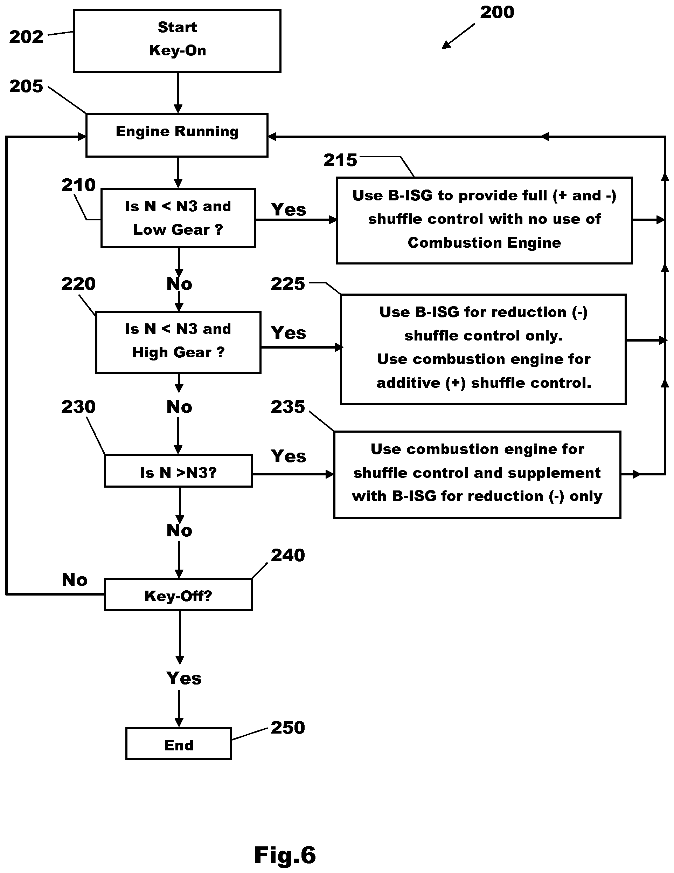

Referring now to Fig.6 there is shown a second embodiment of a method of reducing motor vehicle driveline shuffle for a motor vehicle having a combustion engine and an integrated starter-generator driven by a crankshaft of the combustion engine.

The method 200 starts in box 202 which represents a Key-on event and then advances to box 205 where the combustion engine of the motor vehicle is running.

From box 205 the method advances to box 210 to check whether the current rotational speed (N) of a crankshaft of the engine is less than a predefined speed threshold (N3) and whether a low gear is selected in a transmission of the motor vehicle thereby ensuring that a current shuffle frequency is below a predefined shuffle frequency limit (F).

If the conditions set out in box 210 are met then the method advances to box 215 where the integrated starter-generator is used to reduce driveline shuffle by providing both positive and negative torque to the crankshaft of the combustion engine when required to reduce driveline shuffle.

From box 215 the method returns to box 205 and then on to box 210. If when checked in box 210 the conditions are not met then the method advances to box 220.

In box 220 it is checked whether the current rotational speed (N) of a crankshaft of the engine is less than the predefined speed threshold (N3) and whether the transmission is in a high gear likely to result in a shuffle frequency above the predefined shuffle frequency limit (F).

If the conditions set out in box 220 are met, the method advances to box 225.

In box 225 the integrated starter-generator is used to reduce driveline shuffle by providing negative torque to the crankshaft of the combustion engine when required to reduce driveline shuffle. Any positive torque required to reduce driveline shuffle is provided by the combustion engine itself by increasing fuelling or advancing spark timing.

From box 225 the method returns to box 205 and then on to box 110 and the previously described steps are repeated.

Referring back to box 220 if the conditions are not met the method advances to box 230 to carry out a further check to confirm that the current crankshaft rotational speed (N) is greater than the second predefined speed threshold (N3).

If when checked in box 230 the current crankshaft speed (N) is greater than the second predefined speed threshold (N3) the method advances to box 235.

In box 235 the reduction of driveline shuffle is primarily reduced by using the combustion engine to provide both positive and negative torque as required to reduce the driveline shuffle. The integrated starter-generator is used to provide negative torque to the crankshaft of the combustion engine but the effect of this is primarily to reduce the magnitude of the negative torque that has to be supplied from the combustion engine as the integrated starter-generator is unable when the combustion engine is operating at such a high rotational speed to effectively reduce driveline shuffle.

From box 235 the method returns to box 205 and then on to box 210 and the previously described steps are repeated.

Referring back to box 230 if the current speed of the crankshaft of the engine is not greater than second predefined speed threshold (N2) the method advances to box 240 to check whether a Key-off event has occurred and if it has the method 200 ends as indicated in box 250. If a Key-off event has not occurred then the method returns to box 105 and then on to box 210 and the previously described steps are repeated. It will be appreciated that in practice whenever a Key-off event arises the method 200 will end.

Therefore in summary, use of the integrated starter-generator and the combustion engine are used as actuators to reduce driveline shuffle in the most effective manner by using the integrated starter motor to fully reduce the driveline shuffle when it is the most effective actuator to achieve the desired result at low engine speeds, to use a combination of combustion engine positive control supplemented by negative speed reduction using the integrated starter-generator at higher engine speeds and to rely primarily on combustion engine positive and negative speed control at higher engine speed levels where the integrated starter-generator is unable to make much contribution to speed control.

The control strategies employed are therefore based primarily on the rotational speed of the engine and whether the integrated starter-generator or the combustion engine is the best actuator to use at that speed. It will be appreciated that, ideally, shuffle will be reduced to zero but in practice a small amount of shuffle will remain.

It will be appreciated by those skilled in the art that although the invention has been described by way of example with reference to one or more embodiments it is not limited to the disclosed embodiments and that alternative embodiments could be constructed without departing from the scope of the invention as defined by the appended claims.

## Claims

1. A motor vehicle (1) having a combustion engine (5) driving a multi-speed transmission (6), an integrated starter-generator (10) driveably connected to a crankshaft (3) of the combustion engine (5) and an electronic controller (20) to control the operation of the combustion engine (5) and the integrated starter-generator (10), the electronic controller (20) being operable to control use of the combustion engine (5) and the integrated starter-generator (10) in a number of shuffle reduction modes including a first shuffle reduction mode, wherein when the first shuffle reduction mode is selected by the electronic controller (20), the electronic controller (20) is operable to use only the integrated starter-generator (10) to reduce driveline shuffle, **characterised in that** the electronic controller (20) is arranged to select the shuffle selection mode to be used based at least partially on the rotational speed of the crankshaft (3) of the combustion engine (5), and **in that** there is a second reduction shuffle mode and/or a third reduction shuffle mode, wherein when the second shuffle reduction mode is selected by the electronic controller (20), the electronic controller (20) is operable to use the engine (5) and the integrated starter-generator (10) in combination to reduce driveline shuffle, the integrated starter-generator (10) being used to reduce driveline shuffle by applying a negative braking torque to the crankshaft (3) to reduce the rotational speed of the crankshaft (3) and the engine (5) being used to increase the rotational speed of the crankshaft (3), and wherein when the third shuffle reduction mode is selected by the electronic controller (20), the electronic controller (20) is operable to use the engine (5) as the primary means for increasing and reducing the rotational speed of the crankshaft (3) to reduce driveline shuffle and use the integrated starter-generator (10) to supplement the effect of the engine (5) when the engine (5) is operating to reduce the speed of the crankshaft (3) by applying additional negative braking torque to the crankshaft (3).

2. A vehicle as claimed in claim 1 wherein, when there is a need to increase the rotational speed of the crankshaft (3) to reduce driveline shuffle, the electronic controller (20) is arranged to use the integrated starter-generator (10) to apply a positive torque to the crankshaft (3) of the engine (5) and, when there is a need to reduce the rotational speed of the crankshaft (3) to reduce driveline shuffle, the electronic controller (20) is arranged to use the integrated starter-generator (10) to apply a negative braking torque to the crankshaft (3) of the engine (5).

3. A vehicle as claimed in claim 1 or in claim 2 wherein the electronic controller (20) is operable to only use the first shuffle reduction mode when the rotational speed of the crankshaft (3) is below a first predefined low speed threshold.

4. A vehicle as claimed in claim 1 or in claim 2 wherein the electronic controller (20) is operable to only use the first shuffle reduction mode when the rotational speed of the crankshaft (3) is below a predefined speed threshold and a driveline shuffle frequency is below a predefined shuffle frequency threshold.

5. A vehicle as claimed in claim 3 wherein the electronic controller (20) is operable to use the second shuffle mode when the rotational speed of the crankshaft (3) is above the first predefined low speed threshold and below a second higher speed threshold.

6. A vehicle as claimed in claim 4 wherein the electronic controller (20) is operable to use second shuffle mode when the rotational speed of the crankshaft (3) is below the predefined speed threshold and a shuffle frequency of the driveline is above the shuffle frequency threshold.

7. A vehicle as claimed in claim 5 wherein the electronic controller (20) is operable to use the third shuffle reduction mode when the rotational speed of the engine (5) is above the second predefined speed threshold.

8. A vehicle as claimed in claim 6wherein the electronic controller (20) is operable to use the third shuffle reduction mode when the rotational speed of the engine is above the predefined speed threshold.

9. A method of reducing motor vehicle driveline shuffle comprising:-
a/ in a first engine rotational speed dependent shuffle reduction mode utilising only an integrated starter- generator (10) driveably connected to a crankshaft (3) of a combustion engine (5) of the motor vehicle (1) to reduce driveline shuffle;
b/ in a second engine rotational speed dependent shuffle reduction mode utilising the combustion engine (5) and the integrated starter-generator (10) in combination to reduce driveline shuffle by using the integrated starter- generator (10) to apply a negative braking torque to the crankshaft (3) when there is a need to reduce the rotational speed of the crankshaft (3) and by using the combustion engine (5) to increase the rotational speed of the crankshaft (3), when there is a need to increase the rotational speed of the crankshaft (3); and
c/ in a third engine rotational speed dependent shuffle reduction mode utilising the combustion engine (5) as the primary means for increasing and reducing the rotational speed of the crankshaft (3) so as to reduce driveline shuffle when the rotational speed of the crankshaft (3) is above the second predefined speed threshold and use the integrated starter-generator to supplement the combustion engine (5) by applying additional negative braking torque to the crankshaft (3) when there is a need to reduce the rotational speed of the crankshaft (3).

10. A method of reducing motor vehicle driveline shuffle as claimed in claim 9 wherein the method further comprises using the first engine rotational speed dependent shuffle reduction mode when the rotational speed of the crankshaft (3) is below a first predefined speed threshold, using the second engine rotational speed dependent shuffle reduction mode when the rotational speed of the crankshaft (3) is below a second predefined speed threshold that is higher than the first predefined low speed threshold, and using the third engine rotational speed dependent shuffle reduction mode when the rotational speed of the crankshaft (3) is above the second predefined speed threshold.

11. A method of reducing motor vehicle driveline shuffle as claimed in claim 9 wherein the method further comprises using the first engine rotational speed dependent shuffle reduction mode when the rotational speed of the crankshaft (3) is below a predefined speed threshold and a driveline shuffle frequency is below a shuffle frequency limit, using the second engine rotational speed dependent shuffle reduction mode when the rotational speed of the crankshaft (3) is below the predefined speed threshold and the driveline shuffle frequency is above the shuffle frequency limit and using the third engine rotational speed dependent shuffle reduction mode when the rotational speed of the crankshaft (3) is above the predefined speed threshold.

12. A method as claimed in claim 11 in which the driveline frequency is dependent upon a gear ratio selected in a multi-speed transmission (6) driven by the engine (5) wherein, the driveline shuffle frequency is not higher than the shuffle frequency limit when the rotational speed of the engine (5) is at the predefined speed threshold and a low gear is selected in the transmission (6) and the driveline shuffle frequency is above the shuffle frequency limit when the rotational speed of the engine (5) is at the predefined speed threshold and a high gear is selected in the transmission (6).

## Patentansprüche

1. Kraftfahrzeug (1), das einen Verbrennungsmotor (5), der ein mehrstufiges Getriebe (6) antreibt, einen integrierten Anlasser-Generator (10), der antriebsmäßig mit einer Kurbelwelle (3) des Verbrennungsmotors (5) verbunden ist, und ein elektronisches Steuergerät (20) zum Steuern des Betriebs des Verbrennungsmotors (5) und des integrierten Anlasser-Generators (10) aufweist, wobei das elektronische Steuergerät (20) betrieben werden kann, um eine Verwendung des Verbrennungsmotors (5) und des integrierten Anlasser-Generators (10) in einer Anzahl von Ruckelschwingungsverringerungsmodi zu steuern, die einen ersten Ruckelschwingungsverringerungsmodus beinhalten, wobei, wenn der erste Ruckelschwingungsverringerungsmodus durch das elektronische Steuergerät (20) ausgewählt wird, das elektronische Steuergerät (20) betrieben werden kann, um nur den integrierten Anlasser-Generator (10) zu verwenden, um Ruckelschwingung des Antriebsstrangs zu verringern, **dadurch gekennzeichnet, dass** das elektronische Steuergerät (20) angeordnet ist, um den zu verwendenden Ruckelschwingungsauswahlmodus mindestens teilweise basierend auf der Drehzahl der Kurbelwelle (3) des Verbrennungsmotors (5) auszuwählen, und dass es einen zweiten Ruckelschwingungsverringerungsmodus und/oder einen dritten Ruckelschwingungsverringerungsmodus gibt, wobei, wenn der zweite Ruckelschwingungsverringerungsmodus durch das elektronische Steuergerät (20) ausgewählt wird, das elektronische Steuergerät (20) betrieben werden kann, sodass es den Motor (5) und den integrierten Anlasser-Generator (10) kombiniert verwendet, um Ruckelschwingung des Antriebsstrangs zu verringern, wobei der integrierte Anlasser-Generator (10) verwendet wird, um Ruckelschwingung des Antriebsstrangs zu verringern, indem ein negatives Bremsmoment auf die Kurbelwelle (3) angewendet wird, um die Drehzahl der Kurbelwelle (3) zu verringern, und der Motor (5) verwendet wird, um die Drehzahl der Kurbelwelle (3) zu erhöhen, und wobei, wenn der dritte Ruckelschwingungsverringerungsmodus von der elektronischen Steuerung (20) ausgewählt wird, die elektronische Steuerung (20) betrieben werden kann, um den Motor (5) als die primäre Einrichtung zum Erhöhen und Verringern der Drehzahl der Kurbelwelle (3) zu verwenden, um Ruckelschwingung des Antriebsstrangs zu verringern, und den integrierten Anlasser-Generator (10) zu verwenden, um die Wirkung des Motors (5) zu ergänzen, wenn der Motor (5) in Betrieb ist, um die Drehzahl der Kurbelwelle (3) zu verringern, indem zusätzliches negatives Bremsmoment auf die Kurbelwelle (3) angewendet wird.

2. Fahrzeug gemäß Anspruch 1, wobei, wenn die Notwendigkeit besteht, die Drehzahl der Kurbelwelle (3) zu erhöhen, um Ruckelschwingung des Antriebsstrangs zu verringern, das elektronische Steuergerät (20) angeordnet ist, um den integrierten Anlasser-Generator (10) zu verwenden, um ein positives Drehmoment auf die Kurbelwelle (3) des Motors (5) anzuwenden, und, wenn die Notwendigkeit besteht, die Drehzahl der Kurbelwelle (3) zu verringern, um Ruckelschwingung des Antriebsstrangs zu verringern, das elektronische Steuergerät (20) angeordnet ist, um den integrierten Anlasser-Generator (10) verwendet, um ein negatives Bremsmoment auf die Kurbelwelle (3) des Motors (5) anzuwenden.

3. Fahrzeug gemäß Anspruch 1 oder Anspruch 2, wobei das elektronische Steuergerät (20) betrieben werden kann, um den ersten Ruckelschwingungsverringerungsmodus nur dann zu verwenden, wenn die Drehzahl der Kurbelwelle (3) unter einem ersten vordefinierten Schwellenwert für niedrige Drehzahl ist.

4. Fahrzeug gemäß Anspruch 1 oder 2, wobei das elektronische Steuergerät (20) betrieben werden kann, um den ersten Ruckelschwingungsverringerungsmodus nur dann zu verwenden, wenn die Drehzahl der Kurbelwelle (3) unter einem vordefinierten Drehzahlschwellenwert ist und eine Ruckelschwingungsfrequenz des Antriebsstrangs unter einem vordefinierten Ruckelschwingungsfrequenz-Schwellenwert ist.

5. Fahrzeug gemäß Anspruch 3, wobei das elektronische Steuergerät (20) betrieben werden kann, um den zweiten Ruckelschwingungsmodus zu verwenden, wenn die Drehzahl der Kurbelwelle (3) über dem ersten vordefinierten Schwellenwert für niedrige Drehzahl und unter einem zweiten höheren Drehzahlschwellenwert ist.

6. Fahrzeug gemäß Anspruch 4, wobei das elektronische Steuergerät (20) betrieben werden kann, um den zweiten Shuffle-Modus zu verwenden, wenn die Drehzahl der Kurbelwelle (3) unter dem vordefinierten Drehzahlschwellwert ist und eine Ruckelschwingungsfrequenz des Antriebsstrangs über dem Ruckelschwingungsfrequenz-Schwellenwert ist.

7. Fahrzeug gemäß Anspruch 5, wobei das elektronische Steuergerät (20) betrieben werden kann, um den dritten Ruckelschwingungsverringerungsmodus zu verwenden, wenn die Drehzahl des Motors (5) über dem zweiten vordefinierten Drehzahlschwellenwert ist.

8. Fahrzeug gemäß Anspruch 6, wobei das elektronische Steuergerät (20) betrieben werden kann, um den dritten Ruckelschwingungsverringerungsmodus zu verwenden, wenn die Drehzahl des Motors über dem vordefinierten Drehzahlschwellenwert ist.

9. Verfahren zum Verringerung einer Ruckelschwingung des Antriebsstrangs eines Kraftfahrzeugs, umfassend:
a) in einem ersten motordrehzahlabhängigen Ruckelschwingungsverringerungsmodus, Verwenden nur eines integrierten Anlasser-Generators (10), der antriebsmäßig mit einer Kurbelwelle (3) eines Verbrennungsmotors (5) des Kraftfahrzeugs (1) verbunden ist, um Ruckelschwingung in dem Antriebsstrang zu verringern;
b) in einem zweiten motordrehzahlabhängigen Ruckelschwingungsverringerungsmodus, Verwenden des Verbrennungsmotors (5) und des integrierten Anlasser-Generator (10) kombiniert, um Ruckelschwingung des Antriebsstrangs zu verringern, indem der integrierte Anlasser-Generator (10) verwendet wird, um ein negatives Bremsmoment auf die Kurbelwelle (3) anzuwenden, wenn die Notwendigkeit besteht, die Drehzahl der Kurbelwelle (3) zu verringern, und indem der Verbrennungsmotor (5) verwendet wird, um die Drehzahl der Kurbelwelle (3) zu erhöhen, wenn die Notwendigkeit besteht, die Drehzahl der Kurbelwelle (3) zu erhöhen; und
c) in einem dritten motordrehzahlabhängigen Ruckelschwingungsverringerungsmodus, Verwenden des Verbrennungsmotors (5) als primäre Einrichtung zum Erhöhen und Verringern der Drehzahl der Kurbelwelle (3), um Ruckelschwingung des Antriebsstrangs zu verringern, wenn die Drehzahl der Kurbelwelle (3) über dem zweiten vordefinierten Drehzahlschwellenwert ist, und Verwenden des integrierten Anlasser-Generators, um den Verbrennungsmotor (5) zu ergänzen, indem ein zusätzliches negatives Bremsmoment auf die Kurbelwelle (3) angewendet wird, wenn die Drehzahl der Kurbelwelle (3) verringert werden muss.

10. Verfahren zum Verringern von Ruckelschwingung in einem Kraftfahrzeug-Antriebsstrang gemäß Anspruch 9, das Verfahren ferner umfassend ein Verwenden des ersten motordrehzahlabhängigen Ruckelschwingungsverringerungsmodus, wenn die Drehzahl der Kurbelwelle (3) unter einem ersten vordefinierten Drehzahlschwellenwert ist, Verwenden des zweiten motordrehzahlabhängigen Ruckelschwingungsverringerungsmodus, wenn die Drehzahl der Kurbelwelle (3) unter einem zweiten vordefinierten Drehzahlschwellenwert ist, der höher ist als der erste vordefinierte niedrige Drehzahlschwellenwert, und Verwenden des dritten motordrehzahlabhängigen Ruckelschwingungsverringerungsmodus, wenn die Drehzahl der Kurbelwelle (3) über dem zweiten vordefinierten Drehzahlschwellenwert ist.

11. Verfahren zum Verringern von Ruckelschwingung in einem Kraftfahrzeug-Antriebsstrang gemäß Anspruch 9, das Verfahren ferner umfassend ein Verwenden des ersten motordrehzahlabhängigen Ruckelschwingungsverringerungsmodus, wenn die Drehzahl der Kurbelwelle (3) unter einem ersten vordefinierten Drehzahlschwellenwert ist, und eine Antriebsstrang-Ruckelschwingungsfrequenz unter einem Ruckelschwingungsfrequenz-Grenzwert ist, Verwenden des zweiten motordrehzahlabhängigen Ruckelschwingungsverringerungsmodus, wenn die Drehzahl der Kurbelwelle (3) unter dem vordefinierten Drehzahlschwellwert ist und die Antriebsstrang-Ruckelschwingungsfrequenz über dem Ruckelschwingungsfrequenz-Grenzwert ist und Verwenden des dritten motordrehzahlabhängigen Ruckelschwingungsverringerungsmodus, wenn die Drehzahl der Kurbelwelle (3) über dem vordefinierten Drehzahlschwellwert ist.

12. Verfahren gemäß Anspruch 11, wobei die Antriebsstrangfrequenz von einem Übersetzungsverhältnis abhängt, das in einem von dem Motor (5) angetriebenen mehrstufigen Getriebe (6) gewählt wird, wobei die Antriebsstrang-Ruckelschwingungsfrequenz nicht höher ist als der Ruckelschwingungsfrequenz-Grenzwert, wenn die Drehzahl des Motors (5) bei an vordefinierten Drehzahlschwelle ist und ein niedriger Gang in dem Getriebe (6) gewählt ist, und die Antriebsstrang-Ruckelschwingungsfrequenz über dem Ruckelschwingungsfrequenz-Grenzwert ist, wenn die Drehzahl des Motors (5) an der vordefinierten Drehzahlschwelle ist und ein hoher Gang in dem Getriebe (6) gewählt ist.

## Revendications

1. Un véhicule à moteur (1) ayant un moteur à combustion (5) entraînant une transmission à plusieurs vitesses (6), un générateur-démarreur intégré (10) relié en entraînement à un vilebrequin (3) du moteur à combustion (5) et un contrôleur électronique (20) pour commander le fonctionnement du moteur à combustion (5) et du générateur-démarreur intégré (10), le contrôleur électronique (20) étant utilisable pour commander l'utilisation du moteur à combustion (5) et du générateur-démarreur intégré (10) dans un certain nombre de modes de réduction de shuffle incluant un premier mode de réduction de shuffle, dans lequel, lorsque le premier mode de réduction de shuffle est sélectionné par le contrôleur électronique (20), le contrôleur électronique (20) peut fonctionner pour utiliser uniquement le générateur-démarreur intégré (10) pour réduire le shuffle de la transmission, **caractérisé en ce que** le contrôleur électronique (20) est agencé pour sélectionner le mode de sélection de shuffle à utiliser sur la base au moins partiellement de la vitesse de rotation du vilebrequin (3) du moteur à combustion (5), et **en ce qu'**il existe un deuxième mode de réduction de shuffle et/ou un troisième mode de réduction de shuffle, dans lequel, lorsque le deuxième mode de réduction de shuffle est sélectionné par le contrôleur électronique (20), le contrôleur électronique (20) peut fonctionner pour utiliser le moteur (5) et le générateur-démarreur intégré (10) en combinaison pour réduire le shuffle de la transmission, le générateur-démarreur intégré (10) étant utilisé pour réduire le shuffle de la transmission en appliquant un couple de freinage négatif au vilebrequin (3) pour réduire la vitesse de rotation du vilebrequin (3) et le moteur (5) étant utilisé pour augmenter la vitesse de rotation du vilebrequin (3), et dans lequel, lorsque le troisième mode de réduction de shuffle est sélectionné par le contrôleur électronique (20), le contrôleur électronique (20) peut fonctionner pour utiliser le moteur (5) comme moyen principal pour augmenter et réduire la vitesse de rotation du vilebrequin (3) afin de réduire le shuffle de transmission et utiliser le générateur-démarreur intégré (10) pour compléter l'effet du moteur (5) lorsque le moteur (5) fonctionne pour réduire la vitesse du vilebrequin (3) en appliquant un couple de freinage négatif supplémentaire au vilebrequin (3).

2. Un véhicule selon la revendication 1, dans lequel, lorsqu'il est nécessaire d'augmenter la vitesse de rotation du vilebrequin (3) pour réduire le shuffle de la transmission, le contrôleur électronique (20) est agencé pour utiliser le générateur-démarreur intégré (10) pour appliquer un couple positif au vilebrequin (3) du moteur (5) et, lorsqu'il est nécessaire de réduire la vitesse de rotation du vilebrequin (3) pour réduire le shuffle de la transmission, le contrôleur électronique (20) est agencé pour utiliser le générateur-démarreur intégré (10) pour appliquer un couple de freinage négatif au vilebrequin (3) du moteur (5).

3. Un véhicule selon la revendication 1 ou la revendication 2, dans lequel le contrôleur électronique (20) peut fonctionner pour n'utiliser le premier mode de réduction de shuffle que lorsque la vitesse de rotation du vilebrequin (3) est inférieure à un premier seuil de basse vitesse prédéfini.

4. Un véhicule selon la revendication 1 ou la revendication 2, dans lequel le contrôleur électronique (20) peut fonctionner pour n'utiliser le premier mode de réduction de shuffle que lorsque la vitesse de rotation du vilebrequin (3) est inférieure à un seuil de vitesse prédéfini et qu'une fréquence de shuffle de la transmission est inférieure à un seuil de fréquence de shuffle prédéfini.

5. Un véhicule selon la revendication 3, dans lequel le contrôleur électronique (20) peut fonctionner pour utiliser le deuxième mode de shuffle lorsque la vitesse de rotation du vilebrequin (3) est supérieure au premier seuil de basse vitesse prédéfini et inférieure à un deuxième seuil de vitesse plus élevé.

6. Un véhicule selon la revendication 4, dans lequel le contrôleur électronique (20) peut fonctionner pour utiliser un deuxième mode de shuffle lorsque la vitesse de rotation du vilebrequin (3) est inférieure au seuil de vitesse prédéfini et une fréquence de shuffle de la transmission est supérieure au seuil de fréquence de shuffle.

7. Un véhicule selon la revendication 5, dans lequel le contrôleur électronique (20) peut fonctionner pour utiliser le troisième mode de réduction de shuffle lorsque la vitesse de rotation du moteur (5) est supérieure au deuxième seuil de vitesse prédéfini.

8. Un véhicule selon la revendication 6, dans lequel le contrôleur électronique (20) peut fonctionner pour utiliser le troisième mode de réduction de shuffle lorsque la vitesse de rotation du moteur est supérieure au seuil de vitesse prédéfini.

9. Un procédé de réduction du shuffle de la transmission d'un véhicule à moteur comprenant :
a/ dans un premier mode de réduction du shuffle dépendant de la vitesse de rotation du moteur, utiliser uniquement un générateur-démarreur intégré (10) relié en entraînement à un vilebrequin (3) d'un moteur à combustion (5) du véhicule à moteur (1) pour réduire le shuffle de la transmission ;
b/ dans un deuxième mode de réduction du shuffle dépendant de la vitesse de rotation du moteur, utiliser le moteur à combustion (5) et le générateur-démarreur intégré (10) en combinaison pour réduire le shuffle de la transmission en utilisant le générateur-démarreur intégré (10) pour appliquer un couple de freinage négatif au vilebrequin (3) lorsqu'il est nécessaire de réduire la vitesse de rotation du vilebrequin (3) et en utilisant le moteur à combustion (5) pour augmenter la vitesse de rotation du vilebrequin (3), lorsqu'il est nécessaire d'augmenter la vitesse de rotation du vilebrequin (3) ; et
c/ dans un troisième mode de réduction du shuffle dépendant de la vitesse de rotation du moteur, utiliser le moteur à combustion (5) comme moyen principal pour augmenter et réduire la vitesse de rotation du vilebrequin (3) de manière à réduire le shuffle de la transmission lorsque la vitesse de rotation du vilebrequin (3) est supérieure au deuxième seuil de vitesse prédéfini et utiliser le générateur-démarreur intégré pour compléter le moteur à combustion (5) en appliquant un couple de freinage négatif supplémentaire au vilebrequin (3) lorsqu'il est nécessaire de réduire la vitesse de rotation du vilebrequin (3).

10. Un procédé de réduction du shuffle de la transmission d'un véhicule à moteur selon la revendication 9, dans lequel le procédé comprend en outre l'utilisation du premier mode de réduction du shuffle dépendant de la vitesse de rotation du moteur lorsque la vitesse de rotation du vilebrequin (3) est inférieure à un premier seuil de vitesse prédéfini, l'utilisation du deuxième mode de réduction du shuffle dépendant de la vitesse de rotation du moteur lorsque la vitesse de rotation du vilebrequin (3) est inférieure à un deuxième seuil de vitesse prédéfini qui est supérieur au premier seuil de basse vitesse prédéfini, et l'utilisation du troisième mode de réduction du shuffle dépendant de la vitesse de rotation du moteur lorsque la vitesse de rotation du vilebrequin (3) est supérieure au deuxième seuil de vitesse prédéfini.

11. Un procédé de réduction du shuffle de la transmission d'un véhicule à moteur selon la revendication 9, dans lequel le procédé comprend en outre l'utilisation du premier mode de réduction du shuffle dépendant de la vitesse de rotation du moteur lorsque la vitesse de rotation du vilebrequin (3) est inférieure à un seuil de vitesse prédéfini et qu'une fréquence de shuffle de la transmission est inférieure à une limite de fréquence de shuffle, l'utilisation du deuxième mode de réduction du shuffle dépendant de la vitesse de rotation du moteur lorsque la vitesse de rotation du vilebrequin (3) est inférieure au seuil de vitesse prédéfini et que la fréquence de shuffle de la transmission est supérieure à la limite de fréquence de shuffle et l'utilisation du troisième mode de réduction du shuffle dépendant de la vitesse de rotation du moteur lorsque la vitesse de rotation du vilebrequin (3) est supérieure au seuil de vitesse prédéfini.

12. Un procédé selon la revendication 11, dans lequel la fréquence de la transmission dépend d'un rapport de transmission sélectionné dans une transmission à plusieurs vitesses (6) entraînée par le moteur (5), dans lequel, la fréquence de shuffle de la transmission n'est pas supérieure à la limite de fréquence de shuffle lorsque la vitesse de rotation du moteur (5) est égale au seuil de vitesse prédéfini et qu'une basse vitesse est sélectionnée dans la transmission (6) et la fréquence de shuffle de la transmission est supérieure à la limite de fréquence de shuffle lorsque la vitesse de rotation du moteur (5) est égale au seuil de vitesse prédéfini et qu'une vitesse supérieure est sélectionnée dans la transmission (6).
